# EUROPEAN PATENT SPECIFICATION

(11) **EP 0 430 479 B1**
(45) Date of publication and mention of the grant of the patent: **12.01.1994**
(21) Application number: 90312312.3
(22) Date of filing: 12.11.1990
(51) Int. Cl.: B60J 5/04

(54) **Motor vehicle door having a transparent window frame**
Kraftfahrzeugtür, die mit einem durchsichtigen Rahmen ausgerüstet ist
Porte de véhicule automobile équipée d'un cadre transparent pour fenêtre

(30) Priority: 01.12.1989 US 444641
(43) Date of publication of application: 05.06.1991
(73) Proprietor: GENERAL MOTORS CORPORATION, Detroit Michigan 48202 (US)
(72) Inventor: Chandler, Maurice Paul, Utica, Michigan 48087 (US); Fylan, Michael Shaun, Lakeville, Michigan 48036 (US)
(74) Representative: Denton, Michael John

(56) References cited:
- FR-A- 2 502 230

## Description

The invention relates to a motor vehicle body construction and more particularly to a door having a transparent window frame.

Motor vehicle bodies include a roof panel supported by pillars. The pillars and the roof panel cooperate to define door openings which receive the doors of the motor vehicle.

Automobile bodies of modern design feature large expanses of glass and smoothly curved surfaces which cooperate to provide aesthetically pleasing and aerodynamically efficient vehicles.

It is desirable to provide highly curved side window glass which would contribute to the roundness of the motor vehicle. However, doors must be relatively thin in cross-section in order to maximize the passenger compartment dimensions, and this thinness of the doors limits the ability of the door to receive a highly curved side window glass when the window glass is lowered to the opened position.

Accordingly, it would be desirable to provide a new and improved door in which the side window curvature would be substantially increased, and yet the window could be raised and lowered within the confines of a relatively thin door.

A door in accordance with the preamble of Claim 1 is disclosed in FR-A-2502230.

A door in accordance with the present invention is characterised over FR-A-2502230 by the features specified in the characterising portion of claim 1.

According to the present invention, the door may have a conventional structurally rigid lower portion which movably mounts a transparent window panel for movement between a lowered opened position stored within the lower portion and a raised closed position. The door may also have an arcuate shaped transparent window frame having a lower end fixedly mounted on the lower structural portion and extending upwardly along the pillar and along the roof panel of the motor vehicle to define a structurally rigid upper edge portion of the door closing the space between the transparent window panel and the roof panel and the pillar. The stationary transparent window frame is more curved than the movable window panel so that the vehicle body is dramatically curved and provides an aesthetically pleasing vehicle shape. A transparent seal structure is mounted on the transparent window frame for engagement by the transparent window panel to provide water tight transparent sealing.

Accordingly, the object of the present invention resides in the provision of a door construction in which a structurally rigid transparent window frame is carried by the door and closes out the space between a vertically movable transparent window panel and the vehicle roof.

The present invention also provides a transparent seal structure acting between a vertically movable transparent window panel and a transparent structurally rigid window frame of the door to provide water tight transparent sealing.

The present invention will now be described, by way of example, with reference to the following description of a preferred embodiment, and the appended drawings, in which:-
Figure 1 is a perspective view of a motor vehicle body having a door according to the present invention;
Figure 2 is a sectional view taken in the direction of arrow 2-2 of Figure 1;
Figure 3 is a sectional view taken in the direction of arrows 3-3 of Figure 1;
Figure 4 is an enlarged fragmentary view showing the transparent seal structure acting between the movable transparent window panel and the transparent window frame; and
Figures 5, 6 and 7 show alternate transparent seal structures.

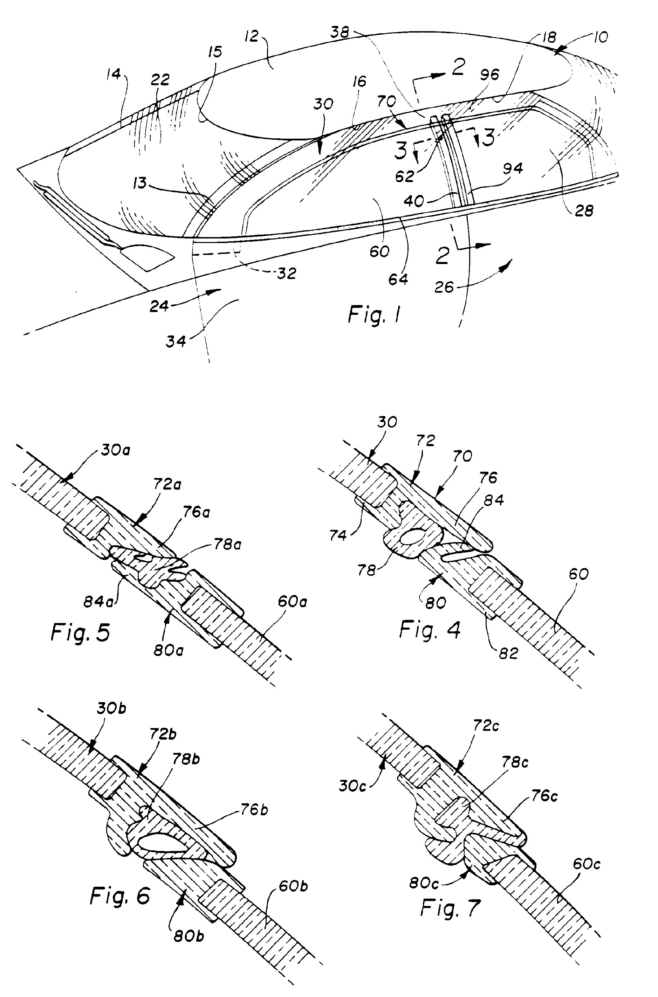

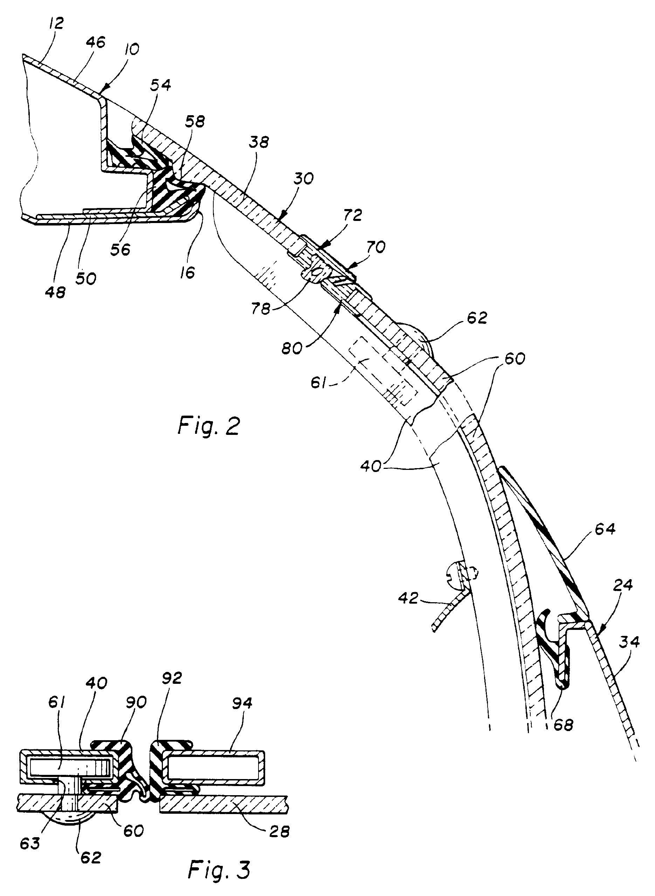

Referring to Figure 1, it is seen that a motor vehicle body, generally indicated at 10 includes a roof panel 12 supported by windshield pillars 13 and 14 and defining a windshield opening 15, a front door opening 16, and a rear door opening 18. A windshield panel 22 closes the windshield opening 15 and overlies and conceals the windshield pillars 13 and 14 supporting the roof panel 12. A front door 24 is hingedly mounted in the front door opening 16, and a rear door 26 is hingedly mounted in the rear door opening 18.

As seen in Figure 1, the roof panel 12 has the appearance from outside the car of being entirely supported by the windshield panel 22, the side windows of the front door 24 and rear door 26, and a rear window 28. In addition, as seen in Figure 1, the motor vehicle body has a highly rounded aesthetically pleasing appearance.

As best seen in Figures 1 and 2, it will be understood that the highly curved and flush contiguous shape of the motor vehicle is enabled by the front door 24 having a transparent window frame 30 which is comprised of a moulded clear polycarbonate material such as the material sold under the tradename LEXAN. As seen in Figure 1, the transparent window frame 30 has an arcuate shape and includes a (forward) lower end 32 which is suitably bolted or bonded onto a lower structural portion 34 of the front door 24. The arcuate shape of the transparent window frame 30 extends upwardly and rearwardly along the windshield panel 22 and windshield pillar 13 and along the edge of the roof panel 12. As seen in Figure 2, a (rearward) upper end 38 of the transparent window frame 30 is supported on the lower structural portion 34 of the front door 24 by a (tubular) strut 40 which extends vertically along the rear edge of the front door 24 inboard the transparent window frame 30 and the side window of the front door. The upper end of the strut 40 is adhesively bonded or bolted to the rearward end 38 of the transparent window frame 30. The lower end of the strut 40 is suitably bonded or fastened to an inner panel 42 of the lower structural portion 34.

As best seen in Figure 2 the roof panel 12 includes an outer panel 46 and an inner panel 48 which are suitably welded together with a reinforcement 50 interposed therebetween. The inner and outer panels 46 and 48 define a flange structure adjacent the front door opening 16. A pair of resilient weatherstrips 54 and 56 are mounted on this flange structure and are sealingly engaged by the transparent window frame 30 when the front door 16 is closed as shown in Figures 1 and 2. The (moulded) transparent window frame 30 is generally uniform in thickness but has an (integrally moulded) rib structure 58 which extends along the length of transparent window frame 30 and serves to rigidify the transparent window frame 30 and also to improve the weather tight engagement with the resilient weatherstrips 54 and 56.

Referring again to Figure 2, it is seen that a transparent window panel 60 is provided for closing the space remaining between the transparent window frame 30 and the lower structural portion 34 of the front door 24. The transparent window panel 60 is of conventional glass or plastic material and is mounted on a window regulator mechanism which raises the transparent window panel 60 to the closed position in flush contiguous relationship with the transparent window frame 30 as seen in Figure 2, and lowers the transparent window panel 60 to an open position. As seen in Figure 3, the mounting and guiding of the transparent window panel 60 may be facilitated by mounting a suitable slide 61 or roller on the edge of transparent window panel 60 by a rivet 62. The strut 40 has an access slot 63 along the outboard face thereof and the slide 61 rides in the strut 40 to guide the transparent window panel 60. As seen in Figure 2 the transparent window panel 60 is sealed in relation to the lower structural portion 34 of the front door 24 by a flexible belt moulding 64 and a weather strip 68.

As best seen in Figures 2 and 4, a transparent seal structure is provided between the movable transparent window panel 60 and the stationary transparent window frame 30. The transparent seal structure, generally indicated at 70, includes a relatively rigid upper portion 72 including a channel shaped base 74 which is force fitted over the edge of the transparent window frame 30 and has an outer leg 76 which reaches towards the movable transparent window panel 60. A compressible transparent (tubular) seal 78 of neoprene is carried by the rigid upper portion 72. A relatively rigid lower portion 80 includes a channel shaped base 82 which is force fitted over the edge of the movable transparent window panel 60 and has a flexible lip portion 84 which yieldably engages against the outer leg 76 of rigid upper portion 72 and also compressibly engages against the transparent (tubular) seal 78. The rigid upper and lower portions 72 and 80 are relatively rigid so that the engagement therebetween lends stability to the movable transparent window panel 60 in the closed position. The transparency of the rigid upper portion 72, the transparent seal 78, and the rigid lower portion 80 causes the transparent window frame 30 and the transparent window panel 60 to appear to be an uninterrupted glass surface, thereby providing an obstructed, transparent, see-through side window construction for the front door 24. The rigid upper portion 72 for retaining the transparent seal 78 may be moulded integrally with the transparent window frame 30.

Figures 5-7 show alternate constructions for the seal structure acting between the transparent window frame 30 and the movable transparent window panel 60. In Figure 5 it is seen that the rigid upper portion 72a and the rigid lower portion 80a respectively have relatively rigid wedge shaped projections 76a and 84a with the transparent seal 78a being mounted on the rigid lower portion 80a and compressed between the wedged shaped projections 76a and 84a.

In Figure 6 the rigid upper portion 72b has a projection 76b which reaches into engagement with the rigid lower portion 80b. The transparent seal 78b is carried by the rigid upper portion 72b and engages with a surface of the rigid lower portion 80b.

In Figure 7 the rigid upper portion 72c carries the transparent seal 78c and has a wedge shaped projection 76c which compresses the transparent seal 78c against an angled surface on the rigid lower portion 80c.

As best seen in Figure 3, the space between front door 24 and the rear door 26 is effectively sealed by the engagement between a weatherstrip 90 carried on the rear side of the strut 40 and a weatherstrip 92 carried on the forward side of a strut 94 which supports a transparent window frame 96 of the rear door 26. The movable rear window 28 of the rear door 26 may also have a slide or roller, not shown, engaged in the strut 94 to mount and guide the rear window 28 for up and down movement. Thus, both the front door 24 and the rear door 26 may be constructed in accordance with the invention and have transparent window frame and frame-to-window seal arrangement.

Thus it is seen that the invention provides a vehicle window construction which provides a dramatically rounded vehicle body shape and yet is structurally rigid and effectively water-tight.

## Claims

1. A door for a motor vehicle body (10) having a side door opening (16) in which the door (24) is hingedly mounted to open and close the door opening; the door (24) having a movable transparent window panel (60) mounted for movement between a lowered open position and a raised closed position, and a window frame (30) which is rigidly mounted and is constructed of a transparent material;
characterised in that the window frame defines an edge portion of the door; and by a transparent seal structure (70) carried by at least one of the transparent window panel (60) or the window frame (30) and effective to provide watertight transparent sealing between the window frame and the transparent window panel.

2. A door as claimed in claim 1, wherein the window frame (30) is constructed of a moulded transparent material and has a stiffening rib (58) extended along a length thereof.

3. A door as claimed in claim 1 or claim 2 in which the side door opening (16) is defined by a roof panel (12) supported by a pillar (13); wherein the window frame (30) extends along the pillar and along the roof panel to define a structurally rigid upper edge portion of the door (24).

4. A door as claimed in claim 3, wherein the window frame (30) has a lower end (32) fixedly mounted on a lower structural portion (34) of the door (24), and an upper end (38), a strut (40) extending substantially vertically between the lower structural portion of the door and the upper end (38) of the window frame to support the window frame.

5. A door as claimed in claim 4, further comprising guide means (61,62,63) acting between the transparent window panel (60) and the strut (40) to support and guide the transparent window panel during movement between open and closed positions.

6. A door as claimed in any one of claims 1 to 5, wherein the transparent seal structure (70) comprises a substantially rigid transparent upper portion (72) fixed to the window frame (30); a substantially rigid transparent lower portion (80) fixed to the window panel; and a compressible transparent seal (78) carried by the upper portion and engageable by the lower portion to provide the watertight seal.

## Patentansprüche

1. Eine Tür für eine Kraftfahrzeugkarosserie (10) mit einer Seitentüröffnung (16), in welcher die Tür (24) gelenkig angebracht ist, um die Türöffnung zu öffnen und zu schließen, wobei die Tür (24) eine bewegbare transparente Fensterfüllung (60), welche für eine Bewegung zwischen einer heruntergelassenen offenen Position und einer angehobenen geschlossenen Position angebracht ist, und einen Fensterrahmen (30) aufweist, welcher starr angebracht und aus einem transparenten Material aufgebaut ist,
dadurch **gekennzeichnet**, daß
der Fensterrahmen einen Randabschnitt der Tür definiert, und daß eine transparente Abdichtstruktur (70) durch wenigstens einen der transparenten Fensterfüllung (60) oder des Fensterrahmens (30) getragen wird und wirksam ist, um eine wasserdichte transparente Abdichtung zwischen dem Fensterrahmen und der transparenten Fensterfüllung zu schaffen.

2. Eine Tür wie in Anspruch 1 beansprucht,
worin der Fensterrahmen (30) aus einem geformten transparenten Material aufgebaut ist und eine Versteifungsrippe (58) aufweist, welche entlang einer Länge davon ausgedehnt ist.

3. Eine Tür wie in Anspruch 1 oder Anspruch 2 beansprucht,
in welcher die Seitentüröffnung (16) durch eine Dachfüllung (12) definiert ist, welche durch einen Pfeiler (13) gestützt ist, wobei sich der Fensterrahmen (30) entlang des Pfeilers und entlang der Dachfüllung erstreckt, um einen strukturell starren oberen Randabschnitt der Tür (24) zu definieren.

4. Eine Tür wie in Anspruch 3 beansprucht,
worin der Fensterrahmen (30) ein unteres Ende (32), welches fest auf einem unteren strukturellen Abschnitt (34) der Tür (24) angebracht ist, und ein oberes Ende (38) aufweist, wobei sich eine Strebe (40) im wesentlichen vertikal zwischen dem unteren strukturellen Abschnitt der Tür und dem oberen Ende (38) des Fensterrahmens erstreckt, um den Fensterrahmen zu stützen.

5. Eine Tür wie in Anspruch 4 beansprucht,
welche weiter Führungsmittel (61, 62, 63) umfaßt, welche zwischen der transparenten Fensterfüllung (60) und der Strebe (40) wirken, um die transparente Fensterfüllung während einer Bewegung zwischen offenen und geschlossenen Positionen zu stützen und zu führen.

6. Eine Tür wie in einem der Ansprüche 1 bis 5 beansprucht,
worin die transparente Abdichtstruktur (70) einen im wesentlichen starren transparenten oberen Abschnitt (72), welcher am Fensterrahmen (30) befestigt ist, einen im wesentlichen starren transparenten unteren Abschnitt (80), welcher an der Fensterfüllung befestigt ist, und eine komprimierbare transparente Abdichtung (78) umfaßt, welche vom oberen Abschnitt getragen wird und durch den unteren Abschnitt in Eingriff bringbar ist, um die wasserdichte Abdichtung zu schaffen.

## Revendications

1. Portière pour une caisse (10) de véhicule automobile comprenant une ouverture (16) de portière latérale dans laquelle la portière (24) est montée sur charnières de manière à ouvrir et fermer l'ouverture de portière; la portière (24) comprenant un panneau transparent de vitre mobile (60) monté de manière à effectuer des mouvements entre des positions abaissée ouverte et remontée fermée, et un cadre de vitre (30), qui est monté de façon rigide et est construit en un matériau transparent;
caractérisée en ce que le cadre de la vitre définit une partie de bord de la portière; et par une structure d'étanchéité transparente (70) supportée au moins par le panneau de vitre transparent (60) ou par le cadre de la vitre (30), et effective de manière à constituer un système d'étanchéité transparent, étanche à l'eau, entre le cadre de la vitre et le panneau transparent de la vitre.

2. Portière selon la revendication 1, dans laquelle le cadre (30) de la vitre est construit à partir d'une matière moulée transparente et comprend une nervure (58) de renfort s'étendant le long de celui-ci.

3. Portière selon la revendication 1 ou la revendication 2, dans laquelle l'ouverture (16) de portière latérale est définie par un panneau de toit (12) supporté par une colonne (13); dans laquelle le cadre (30) de la vitre s'étend le long de la colonne et le long du panneau de toit de manière à définir une partie de bord supérieur à structure rigide de la portière (24).

4. Portière selon la revendication 3, dans laquelle le cadre (30) de la vitre comporte un bord inférieur (32) monté de façon fixe sur une partie structurale inférieure (34) de la portière (24), et un bord supérieur (38), une jambe (40) s'étendant essentiellement verticalement entre la partie structurale inférieure de la portière et le bord supérieur (38) du cadre de la vitre, pour supporter le cadre de la vitre.

5. Portière selon la revendication 4, comprenant en outre des moyens de guidage (61, 62, 63) agissant entre le panneau de vitre transparent (60) et la jambe (40) de manière à supporter et à guider le panneau de vitre transparent pendant le déplacement de celui-ci entre les positions ouverte et fermée.

6. Portière selon l'une quelconque des revendications 1 à 5, dans laquelle la structure transparente d'étanchéité (70) comprend une partie transparente supérieure (72) essentiellement rigide, fixée sur le cadre (30) de la vitre; une partie transparente inférieure (80) essentiellement rigide , fixée sur le panneau de la vitre: et un joint d'étanchéité transparent compressible (78) porté par la partie supérieure, pouvant entrer en engagement avec la partie inférieure de manière à constituer le joint étanche à l'eau.
